# FASCICULE DE BREVET EUROPEEN

(11) **EP 0 928 252 B1**
(45) Date de publication et mention de la délivrance du brevet: **28.11.2001**
(21) Numéro de dépôt: 97942079.1
(22) Date de dépôt: 24.09.1997
(51) Int. Cl.: B60K 15/077

(54) **DISPOSITIF DE PUISAGE DE CARBURANT POUR RESERVOIR DE VEHICULES AUTOMOBILES**
KRAFTSTOFFZUFÜHREINRICHTUNG FÜR EINEN KRAFTFAHRZEUGTANK
DEVICE FOR DRAWING FUEL FOR MOTOR VEHICLE TANK

(30) Priorité: 26.09.1996 FR 9611740
(43) Date de publication de la demande: 14.07.1999
(73) Titulaire: MARWAL SYSTEMS, 51000 Chalons en Champagne (FR)
(72) Inventeur: SERTIER, Bruno, F-51000 Chalons-en-Champagne (FR)
(74) Mandataire: Texier, Christian
(86) Numéro de dépôt international: FR9701673
(87) Numéro de publication internationale: WO9813223

(56) Documents cités:
- WO-A-93/25403
- DE-A- 2 849 461
- DE-A- 3 914 081
- DE-A- 4 335 858
- DE-A- 4 336 060
- US-A- 5 070 849

## Description

La présente invention concerne le domaine des dispositifs de puisage de carburant pour réservoirs de véhicules automobiles.

Plus précisément, la présente invention concerne le domaine des dispositifs de puisage de carburant comprenant :
- une réserve secondaire adaptée pour être placée dans un réservoir principal,
- un moyen de pompage principal adapté pour puiser du carburant dans la réserve, et
- un moyen de pompage auxiliaire type pompe à jet adapté pour puiser du carburant dans le réservoir principal et le transférer dans la réserve secondaire.

On a déjà proposé de nombreux dispositifs de puisage de carburant du type précité.

La présente invention a maintenant pour but de perfectionner les dispositifs de puisage connus.

Ce but est atteint selon la présente invention grâce à un dispositif de puisage du type défini en revendication 1, laquelle est délimitée sous forme d'un préambule et d'une partie caractérisante par rapport au document WO-A-93/25403, et comprenant un dispositif de puisage de carburant pour réservoir de véhicules automobiles, du type comprenant :
- une réserve secondaire adaptée pour être placée dans un réservoir principal,
- un moyen de pompage principal adapté pour puiser du carburant dans la réserve,
- un moyen de pompage auxiliaire type pompe à jet adapté pour puiser du carburant dans le réservoir principal et le transférer dans la réserve secondaire, le corps de la pompe à jet étant orienté verticalement, sortie vers le haut, caractérisé par le fait qu'il comprend en outre un déflecteur placé en regard de la sortie de la pompe à jet pour retourner du carburant issu du gicleur de la pompe à jet vers l'intérieur du venturi de celle-ci, afin de faciliter son amorçage, lorsque le débit injecté dans la pompe à jet est inférieure à un seuil, le déflecteur comprenant une cavité généralement hémisphérique coaxiale à la sortie de la pompe à jet et concave en direction de celle-ci.

La présente invention concerne également les réservoirs équipés d'un tel dispositif de puisage.

D'autres caractéristiques, buts et avantages de l'invention apparaîtront à la lecture de la description détaillée qui va suivre, et en regard des dessins annexés, donnés à titre d'exemple non limitatif et sur lesquels :
- la figure 1 représente une vue schématique en coupe verticale d'un dispositif conforme à la présente invention,
- les figures 2 et 3 représentent des vues en coupe verticale du déflecteur et de la sortie d'une pompe à jet conformes à la présente invention à deux régimes de débit de sortie de la pompe à jet, et
- les figures 4, 5, 6, 7 et 8 illustrent schématiquement, en coupe verticale, cinq variantes de réalisation de déflecteur conforme à la présente invention.

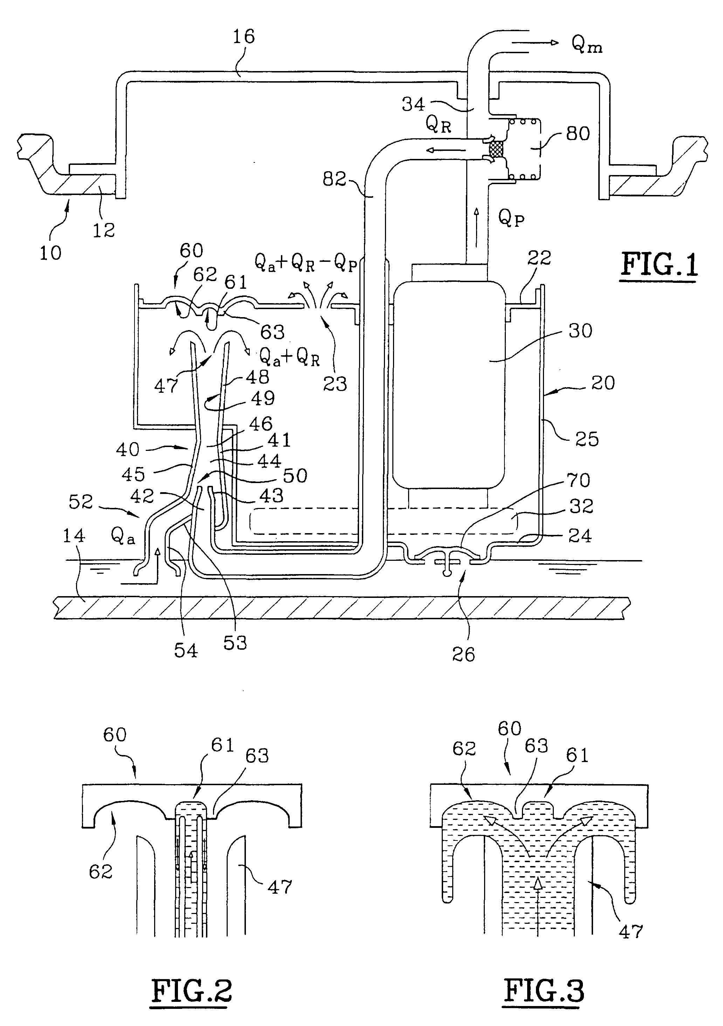

On aperçoit sur la figure 1 annexée, un dispositif de puisage de carburant placé dans un réservoir principal 10 et comprenant une réserve secondaire 20, un moyen de pompage principal 30 et un moyen de pompage auxiliaire 40.

Le réservoir 10 n'est que partiellement représenté sur la figure 1 annexée. Plus précisément, sur celle-ci on a représenté partiellement la paroi supérieure 12 et la paroi inférieure 14 du réservoir 10. En pratique, ce réservoir 10 peut faire l'objet de nombreuses configurations.

La réserve secondaire 20 est formée d'un bol disposé dans le réservoir principal 10 à proximité du fond 14 de celui-ci et supporté dans le réservoir principal 10 par tout moyen approprié. Le cas échéant, le bol 20 peut être ouvert à son extrémité supérieure. Cependant, selon le mode de réalisation particulier représenté sur la figure 1, le bol 20 est quasi-totalement fermé à son extrémité supérieure. Il possède en effet à ce niveau une paroi 22 généralement horizontale qui ne comporte qu'une ouverture localisée 23.

Sur la figure 1, la paroi inférieure généralement horizontale de la réserve secondaire 20 est référencée 24 tandis que sa paroi périphérique est référencée 25.

La réserve secondaire 20 est également susceptible de faire l'objet de nombreuses configurations. En particulier, la réserve secondaire n'est pas limitée à la géométrie particulière illustrée sur la figure 1.

Le moyen de pompage principal 30 est formé de préférence d'une pompe électrique. Ce moyen de pompage principal est adapté pour puiser du carburant dans la réserve secondaire 20 et diriger ce carburant vers un point d'utilisation, carburateur ou injecteur.

Le moyen de pompage principal 30 est muni d'un filtre 32 à son entrée voisine du fond de la réserve secondaire 20. Il est également muni d'un tube 34 sur sa sortie. Le tube 34 traverse une platine ou embase 16 portée par la paroi supérieure 12 du réservoir. Le tube 34 est ensuite dirigé vers le point d'utilisation ou moteur.

Le moyen de pompage auxiliaire est quant à lui formé d'une pompe à jet conçue pour puiser du carburant dans le réservoir principal 10 à proximité du fond de celui-ci et transférer ce carburant dans la réserve secondaire 20.

Selon l'invention, comme indiqué précédemment, le corps de la pompe à jet 40 est vertical, la sortie de cette pompe à jet débouchant vers le haut dans la réserve secondaire 20.

De façon classique en soi, la pompe à jet 40 comporte un corps Venturi (ou tube mélangeur) 41. Selon l'invention, ce corps 41 a son axe vertical. Il est muni d'un gicleur 42 qui reçoit un débit injecté QR. Ce débit injecté QR peut provenir par exemple d'un retour de carburant non consommé par le moteur. Selon le mode de réalisation particulier et non limitatif représenté sur la figure 1, le débit injecté QR provient de la sortie d'un régulateur 80 branché sur le tube de sortie 34. La sortie du régulateur 80 est reliée au gicleur 42 par un conduit 82. Le régulateur 80 est conçu de façon classique en soi pour diriger vers le conduit 82 l'excédent de carburant lorsque la pression dans la conduite 34 dépasse un seuil prédéterminé afin de maintenir dans la conduite 34, la pression à la valeur de tarage. A cet effet, de façon classique en soi, le régulateur 80 peut comprendre par exemple une membrane sollicitée d'un côté par un ressort taré et de l'autre par la pression du carburant régnant dans le conduit 34, laquelle membrane pilote un clapet de sorte que ledit clapet porté par la membrane s'ouvre pour autoriser une évacuation de carburant vers le conduit 82 lorsque la pression de carburant dans le conduit de sortie 34 dépasse le seuil de tarage du ressort sollicitant la membrane.

Selon une autre variante, le débit QR injecté dans le gicleur 42 peut provenir d'un étage de sortie de la pompe 30.

Le gicleur 42 est équipé à sa sortie, située dans une chambre 44 du corps 41, d'un convergent 43.

Comme on le voit sur la figure 1, le gicleur 42 est prévu à la base du bol de réserve 20 et le convergent 43 débouche verticalement vers le haut dans la chambre 44. Le convergent 43 est coaxial à cette chambre 44.

Plus précisément, le convergent 43 formé à la sortie du gicleur 42 est placé en regard d'un second convergent 45 réalisé dans le corps 41. Ce second convergent 45 débouche dans un tube mélangeur 46 relié à la sortie 47 de la pompe à jet par un diffuseur 48 lui-même constitué par exemple d'un divergent 49 en direction de la sortie 47. Comme indiqué précédemment, le gicleur 42, le convergent 43, la chambre 44, le convergent 45, le tube mélangeur 46, la sortie 47, le diffuseur 48 et le divergent 49 sont, selon l'invention, centrés sur un axe vertical.

Le corps 41 possède en outre une entrée latérale 50 qui relie la chambre 44 au fond du réservoir principal 10, à l'extérieur de la réserve secondaire 20. L'entrée latérale 50 débouche dans la chambre 44 entre le convergent 43 prévu à la sortie du gicleur 42 et le second convergent 45 formé dans la chambre 44.

Selon l'invention, cette entrée latérale 50 est reliée à un conduit coudé 52. Le conduit 52 comprend un premier tronçon 53 adjacent au corps 41, incliné vers le bas en éloignement de l'entrée latérale 50 et un second tronçon 54 qui prolonge le premier tronçon 53, est orienté verticalement et débouche à proximité du fond du réservoir principal 10, par exemple sous forme d'une embouchure évasée comme illustré sur la figure 1. En variante, le conduit coudé 52 de la figure 1 pourrait être remplacé par un conduit droit oblique reliant l'entrée latérale 50 et le fond du réservoir.

L'entrée latérale 50 reçoit par l'intermédiaire du conduit 52 un débit aspiré Qa prélevé dans le réservoir de carburant 10.

De façon classique en soi, la sortie 47 délivre un débit transféré égal à la somme du débit injecté QR et du débit aspiré Qa.

Selon une autre caractéristique importante de l'invention, il est prévu en regard de la sortie 47 de la pompe à jet 40 un déflecteur 60.

Celui-ci est conçu pour retourner du carburant issu de cette pompe à jet, vers l'intérieur de celle-ci, dans une phase d'amorçage, lorsque le débit de la pompe à jet 40 est inférieur à un seuil.

De préférence, le déflecteur 60 comprend deux cavités coaxiales 61, 62. La première cavité 61, centrale, est concave en direction de la sortie 47 de la pompe à jet 40 et coaxiale à celle-ci. La première cavité 61 est par exemple hémisphérique.

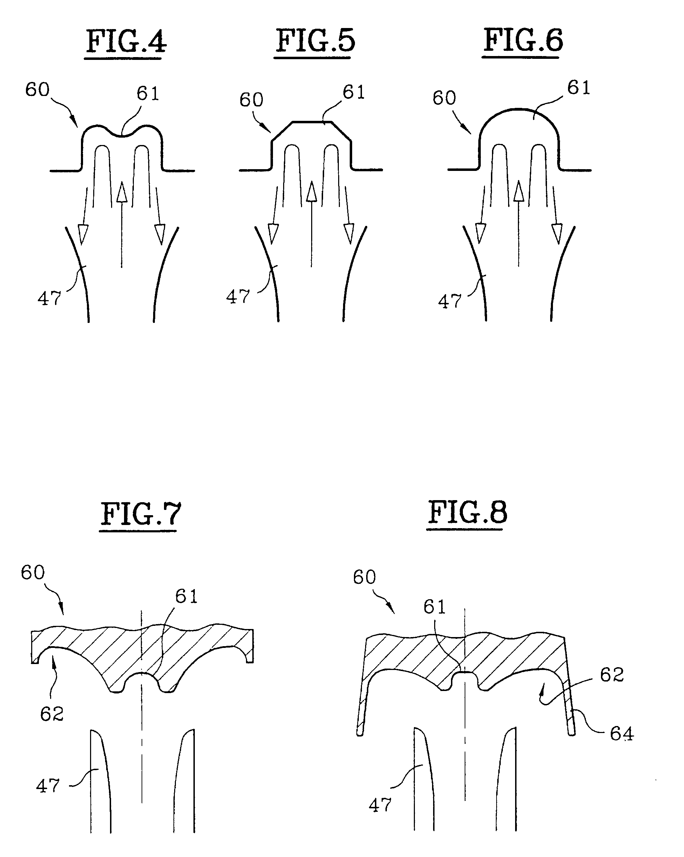

Cependant, l'invention n'est pas limitée à cette géométrie particulière pour la première cavité 61. Ainsi par exemple, la cavité 61 peut posséder un fond au moins légèrement aplati comme illustré sur les figures 2 et 3, ou au contraire un fond muni d'un bossage en saillie comme illustré sur la figure 4, ou une section droite polygonale comme illustré sur la figure 5 et d'une façon plus générale une forme concave comme illustré sur la figure 6.

De préférence, le rayon moyen de la première cavité 61 est inférieur au rayon de la sortie 47. Typiquement et non limitativement le rayon moyen de la cavité 61 est de l'ordre de la moitié du rayon de la sortie 47.

La seconde cavité 62, externe, est annulaire, également coaxiale à la sortie 47 et concave vers celle-ci.

La seconde cavité 62 a de préférence la forme générale d'un demi-tore. Eventuellement, cette cavité 62 peut être prolongée à sa périphérie par une jupe 64 tronconique ou cylindrique, comme illustré sur la figure 8, permettant de dévier l'écoulement transféré (après amorçage) vers l'intérieur du bol formant la réserve secondaire 20.

Le rayon du bord interne de la seconde cavité 62 est de préférence inférieur au rayon de la sortie 47, tandis que le rayon du bord radialement externe de la même cavité 62 est supérieur au rayon de la sortie 47.

De préférence, le déflecteur 60 est formé dans la paroi supérieure 22.

Comme on le voit sur les figures annexées, les fonds des deux cavités coaxiales 61, 62 peuvent être généralement coplanaires et situés dans un plan horizontal transversal à l'axe de la pompe à jet 40.

Néanmoins, cette caractéristique n'est pas indispensable. Comme illustré sur la figure 7, on peut prévoir des cavités coaxiales 61, 62 ayant des fonds non coplanaires.

Selon une autre caractéristique avantageuse de l'invention, l'espace annulaire défini entre le bord libre supérieur de la sortie 47 et le déflecteur 60 possède une section sensiblement égale ou supérieure à la section de la sortie 47.

En outre, comme on le voit sur la figure 1, de préférence la réserve secondaire 20 est munie, dans sa paroi inférieure 24, d'un clapet 70. De façon classique en soi, le clapet 70 est conçu pour interdire le libre écoulement de carburant à partir de la réserve secondaire 20 vers le réservoir principal 10 tout en autorisant au contraire un écoulement de carburant du réservoir principal 10 vers la réserve secondaire 20 lorsque le niveau du carburant dans ce réservoir 10 est supérieur à celui présent dans la réserve secondaire 20 (par exemple lors d'un remplissage du réservoir).

De façon connue en soi, le clapet 70 est conçu pour être plaqué contre la paroi inférieure 24 et obturer par conséquent une ouverture 26 formée dans celle-ci, lorsque le niveau de carburant dans le réservoir principal est inférieur au niveau dans la réserve secondaire 20. Au contraire, le clapet 70 s'élève et libère l'ouverture 26 lorsque le niveau de carburant dans le réservoir principal 10 est supérieur au niveau dans la réserve secondaire 20 (par exemple lors du remplissage du réservoir 10).

L'homme de l'art connaît de nombreuses structures de clapet à cet effet. Pour cette raison, cette structure ne sera pas décrite plus en détail par la suite.

Le fonctionnement du dispositif illustré sur la figure 1 et précédemment décrit est essentiellement le suivant.

La pompe électrique 30 débite à sa sortie un débit de carburant QP.

La consommation du moteur étant référencée Qm, le débit de retour

QR issu du régulateur 80 et dirigé vers le gicleur 42 est égal à QP-Qm.

Le débit à la sortie 47 de la pompe à jet 40 est égal à la somme du débit Qa aspiré dans le réservoir principal 10 par le conduit 52 et du débit injecté QR.

Enfin, le cas échéant, la réserve secondaire 20 débite par l'ouverture 23 prévue dans sa paroi supérieure 22 un débit de carburant égal à Qa+QR-QP.

On notera que la structure de puisage conforme à la présente invention munie d'un venturi vertical permet d'interdire la vidange du bol de réserve 20 sans dégrader les performances d'aspiration.

En effet, le corps 41 de la pompe à jet 40 étant disposé verticalement, celle-ci ne risque pas de vidanger la réserve secondaire 20 pour un niveau de carburant inférieur au bord libre de la sortie 47 de la pompe à jet.

En outre, le déflecteur 60 conforme à la présente invention permet de palier aux problèmes d'amorçage du venturi connus sur certaines pompes à jet classiques.

En effet, en pratique, on constate que dans certaines dispositions le jet seul d'une pompe à effet venturi n'est pas capable de créer une dépression suffisante dans le venturi pour permettre l'amorçage du col lorsque celui-ci est initialement vidangé (lorsque le niveau de carburant dans le réservoir principal est faible).

Au contraire, le déflecteur 60 conforme à la présente invention, possédant une cavité 61 placée en regard de la sortie 47 du venturi, permet de réfléchir, comme on l'a illustré sur la figure 2, le jet issu du gicleur, dans le venturi, pour faciliter la montée de carburant dans le corps 41 de la pompe jusqu'à l'entrée du tube mélangeur 46.

On notera que dans le cadre de la présente invention, il est important que la cavité centrale 61 du déflecteur soit coaxiale avec le gicleur 42, et plus précisément avec le jet issu de ce gicleur 42, ainsi que de préférence à la sortie 47 de la pompe à jet. En effet, si cette condition n'est pas respectée, l'efficacité du déflecteur 60 est pénalisée et il devient nécessaire d'augmenter sensiblement le débit retour QR pour atteindre les mêmes performances. En revanche, si ladite condition est respectée, le jet réfléchi sur la cavité centrale 61 du déflecteur 60 est renvoyé vers l'intérieur du tube venturi de la pompe à jet 40.

A titre d'exemple non limitatif, pour un gicleur 43 ayant un diamètre de sortie de 2mm, le diamètre de la cavité centrale 61 du déflecteur 60 est de l'ordre de 5mm, cette cavité est parfaitement coaxiale à la sortie 47, et la distance, en projection verticale, entre le sommet de la sortie 47 de la pompe à jet et le bord inférieur de la nervure 63 défini entre les deux cavités 61, 62 est de l'ordre de 3mm. Une telle disposition conduit à un débit d'amorçage QR requis de l'ordre de 20l/h.

On a illustré sur la figure 2 une première phase de fonctionnement, correspondant à une phase d'amorçage, dans laquelle la cavité centrale 61 du déflecteur 60 retourne vers la chambre interne 44 de la pompe à jet 40, l'intégralité du carburant issue de la sortie 47.

On a illustré sur la figure 3 une phase ultérieure de fonctionnement, après amorçage, pour laquelle le carburant s'écoule vers l'extérieur, dans la réserve secondaire 20, par l'espace annulaire défini entre la sortie 47 de la pompe à jet 40 et le déflecteur 60. Au cours de cette phase, le carburant est dévié radialement vers l'extérieur par la seconde cavité annulaire 62, puis dévié vers le bas à la périphérie du déflecteur.

Ainsi par exemple, L'entrée du conduit 52 qui communique avec l'entrée d'aspiration 50 de la pompe à jet 40 peut être munie d'un pré-filtre.

## Revendications

1. Dispositif de puisage de carburant pour réservoir de véhicules automobiles, du type comprenant :
- une réserve secondaire (20) adaptée pour être placée dans un réservoir principal (10),
- un moyen de pompage principal (30) adapté pour puiser du carburant dans la réserve (20),
- un moyen de pompage auxiliaire (40) type pompe à jet adapté pour puiser du carburant dans le réservoir principal et le transférer dans la réserve secondaire (20), le corps (41) de la pompe à jet (40) étant orienté verticalement, sortie vers le haut, **caractérisé par le fait qu'**il comprend en outre un déflecteur (60) placé en regard de la sortie (47) de la pompe à jet (40) pour retourner du carburant issu du gicleur de la pompe à jet (40) vers l'intérieur du venturi de celle-ci, afin de faciliter son amorçage, lorsque le débit injecté dans la pompe à jet (40) est inférieure à un seuil, le déflecteur (60) comprenant une cavité (61) généralement hémisphérique coaxiale à la sortie (47) de la pompe à jet et concave en direction de celle-ci.

2. Dispositif selon la revendication 1, **caractérisé par le fait que** l'entrée d'aspiration (50) de la pompe à jet (40) est reliée à un conduit (52) qui débouche à proximité du fond du réservoir principal (10).

3. Dispositif selon la revendication 2, **caractérisé par le fait que** le conduit est coudé (52) et comprend un premier tronçon (53) adjacent au corps (41) de la pompe à jet, incliné vers le bas en éloignement de l'ouverture d'aspiration formée dans le corps (41) de la pompe à jet et prolongé par un second tronçon (54) généralement vertical qui débouche à proximité du fond du réservoir (10).

4. Dispositif selon l'une des revendications 1 à 3, **caractérisé par le fait que** ladite cavité (61) du déflecteur (60) possède un rayon moyen inférieur au rayon de la sortie (47) de la pompe à jet.

5. Dispositif selon l'une des revendications 1 à 4, **caractérisé par le fait que** le rayon moyen de la cavité (61) du déflecteur (60) est de l'ordre de la moitié du rayon de la sortie (47).

6. Dispositif selon l'une des revendications 1 à 5, **caractérisé par le fait que** le déflecteur (60) comprend d'une part une première cavité (61) centrale coaxiale à la sortie (47) de la pompe à jet et concave vers celle-ci et d'autre part une seconde cavité annulaire également coaxiale à la sortie (47) de la pompe à jet (40) et disposée sur l'extérieur de la première cavité (61).

7. Dispositif selon la revendication 6, **caractérisé par le fait que** la seconde cavité annulaire (62) a la forme générale d'un demi-tore.

8. Dispositif selon l'une des revendications 6 ou 7, **caractérisé par le fait que** la seconde cavité annulaire (62) possède un rayon de bord radialement interne inférieur au rayon de la sortie (47) de la pompe à jet et un rayon de bord radialement externe supérieur au rayon de cette sortie (47).

9. Dispositif selon l'une des revendications 1 à 8, **caractérisé par le fait que** le déflecteur (60) est porté par une paroi (22) fixée à l'extrémité supérieure de la réserve secondaire (20).

10. Dispositif selon l'une des revendications 1 à 9 prise en combinaison avec la revendication 6, **caractérisé par le fait que** les deux cavités (61, 62) du déflecteur (60) ont leur fond sensiblement coplanaires.

11. Dispositif selon l'une des revendications 1 à 10, **caractérisé par le fait que** la section de l'espace annulaire définie entre la sortie (47) de la pompe à jet et le déflecteur (60) est sensiblement égale ou supérieure à la section de la sortie (47) de la pompe à jet.

12. Dispositif selon l'une des revendications 1 à 11, **caractérisé par le fait que** la pompe à jet (40) possède un gicleur (43) dont le diamètre de sortie est de l'ordre de 2mm, et **par le fait que** le déflecteur (60) possède une cavité centrale (61) concave en direction de la sortie (47) de la pompe à jet et coaxiale à cette sortie possédant un diamètre de l'ordre de 5mm, la distance séparant le bord libre de la sortie (47) de la pompe à jet et le bord en regard du déflecteur (60) étant de l'ordre de 3mm.

13. Dispositif selon l'une des revendications 1 à 12, **caractérisé par le fait que** la réserve secondaire (20) possède un clapet (70) conçu pour interdire un écoulement de carburant de la réserve secondaire (20) vers le réservoir principal (10) tout en autorisant un libre écoulement de carburant du réservoir principal (10) vers la réserve secondaire (20).

14. Dispositif selon l'une des revendications 1 à 13, **caractérisé par le fait que** la pompe à jet (40) formant moyen de pompage auxiliaire est alimentée par du carburant provenant d'un retour moteur, ou d'un régulateur (80) placé sur la sortie du moyen de pompage principal (30), ou encore d'un étage de sortie de ce moyen de pompage principal (30).

15. Dispositif selon l'une des revendications 1 à 14, **caractérisé par le fait qu'**une cavité annulaire externe (62) du déflecteur (60) est munie à sa périphérie d'une jupe (64) permettant de dévier l'écoulement transféré vers l'intérieur d'une réserve secondaire.

16. Dispositif selon l'une des revendications 1 à 15 prises en combinaison avec la revendication 2, **caractérisé par le fait que** le conduit (52) est muni d'un pré-filtre.

17. Réservoir équipé d'un dispositif de puisage conforme à l'une des revendications 1 à 16.

## Patentansprüche

1. Kraftstofffördervorrichtung für den Tank von Kraftfahrzeugen mit
- einer sekundären Reserve (20), die in einem Haupttank (10) angeordnet werden kann,
- einer Hauptpumpeinrichtung (30), die Kraftstoff aus der Reserve (20) fördern kann,
- einer Hilfspumpeinrichtung (40) vom Typ einer Strahlpumpe, die Kraftstoff aus dem Haupttank fördern und in die sekundäre Reserve (20) übertragen kann, wobei der Körper (41) der Strahlpumpe (40) mit nach oben gerichtetem Ausgang vertikal ausgerichtet ist, **dadurch gekennzeichnet, daß** sie weiterhin ein Ablenkteil (60) umfaßt, das dem Ausgang (47) der Strahlpumpe (40) gegenüber angeordnet ist, um den von der Düse der Strahlpumpe (40) kommenden Kraftstoff zum Inneren seines Venturis zurück führen und dadurch dessen Ansaugen zu erleichtern, wenn die in der Strahlpumpe (50) injizierte Menge unter einem Schwellenwert liegt, wobei das Ablenkteil (60) einen Hohlraum (61) umfaßt, der im Wesentlichen halbkugelförmig und koaxial zum Ausgang (47) der Strahlpumpe und in dessen Richtung konkav ausgebildet ist.

2. Vorrichtung nach Anspruch 1, **dadurch gekennzeichnet, daß** der Ansaugeingang (50) der Strahlpumpe (40) mit einer Leitung (52) verbunden ist, die in der Nähe des Bodens des Haupttankes (10) mündet.

3. Vorrichtung nach Anspruch 2, **dadurch gekennzeichnet, daß** die Leitung (52) abgewinkelt ist und ein erstes Teilstück (53) neben dem Körper (41) der Strahlpumpe umfaßt, das von der Ansaugöffnung, die im Körper (41) der Strahlpumpe ausgebildet ist, entfernend schräg nach unten verläuft und durch ein zweites Teilstück (54) verlängert ist, das im Wesentlichen vertikal verläuft und in der Nähe des Bodens des Tankes (10) mündet.

4. Vorrichtung nach einem der Ansprüche 1 bis 3, **dadurch gekennzeichnet, daß** der besagte Hohlraum (61) des Ablenkteils (60) einen mittleren Radius hat, der unter dem Radius des Ausgangs (47) der Strahlpumpe liegt.

5. Vorrichtung nach einem der Ansprüche 1 bis 4, **dadurch gekennzeichnet, daß** der mittlere Radius des Hohlraums (61) des Ablenkteils (60) in der Größenordnung der Hälfte des Radius des Ausgang (47) liegt.

6. Vorrichtung nach einem der Ansprüch 1 bis 5, **dadurch gekennzeichnet, daß** das Ablenkteil (60) einerseits einen zentralen und zum Ausgang (47) der Strahlpumpe koaxialen und dazu konkav verlaufenden ersten Hohlraum (61) und andererseits einen zweiten ringförmigen und gleichfalls zum Ausgang (47) der Strahlpumpe (40) koaxialen Hohlraum umfaßt, der an der Außenseite des ersten Hohlraums (61) angeordnet ist.

7. Vorrichtung nach Anspruch 6, **dadurch gekennzeichnet, daß** der zweite ringförmige Hohlraum (62) im Wesentlichen eine Halbtorusform hat.

8. Vorrichtung nach einem der Ansprüche 6 und 7, **dadurch gekennzeichnet, daß** der zweite ringförmige Hohlraum (62) einen Radius des radial inneren Randes, der unter dem Radius des Ausgangs (47) der Strahlpumpe liegt, und einen Radius des äußeren radialen Randes hat, der über dem Radius dieses Ausgangs (47) liegt.

9. Vorrichtung nach einem der Ansprüche 1 bis 8, **dadurch gekennzeichnet, daß** das Ablenkteil (60) von einer Wand (22) gehalten ist, die am oberen Ende der sekundären Reserve (20) befestigt ist.

10. Vorrichtung nach einem der Ansprüche 1 bis 9 in Kombination mit Anspruch 6, **dadurch gekennzeichnet, daß** die beiden Hohlräume (61, 62) des Ablenkteils (60) einen im Wesentlichen koplanaren Boden haben.

11. Vorrichtung nach einem der Ansprüche 1 bis 10, **dadurch gekennzeichnet, daß** der Querschnitt des Ringraumes, der zwischen dem Ausgang (47) der Strahlpumpe und dem Ablenkteil (60) begrenzt ist, im Wesentlichen gleich dem oder größer als der Querschnitt des Ausgangs (47) der Strahlpumpe ist.

12. Vorrichtung nach einem der Ansprüche 1 bis 11, **dadurch gekennzeichnet, daß** die Strahlpumpe (40) eine Düse (43) aufweist, deren Ausgangsdurchmesser in der Größenordnung von 2 mm liegt, und daß das Ablenkteil (60) einen zentralen Hohlraum (61) aufweist, der in Richtung des Ausgangs (47) der Strahlpumpe konkav und zu diesem Ausgang koaxial ist sowie einen Durchmesser in der Größenordnung von 5 mm hat, wobei die Strecke, die den freien Rand des Ausgangs (47) der Strahlpumpe und den gegenüberliegenden Rand des Ablenkteils (60) trennt, in der Größenordnung von 3 mm liegt.

13. Vorrichtung nach einem der Ansprüche 1 bis 12, **dadurch gekennzeichnet, daß** die sekundäre Reserve (20) eine Klappe (70) aufweist, die so ausgebildet, daß sie ein Abfließen des Kraftstoffes von der sekundären Reserve (20) zum Haupttank (10) verhindert, aber ein freies Fließen des Kraftstoffes vom Haupttank (10) zur sekundären Reserve (20) ermöglicht.

14. Vorrichtung nach einem der Ansprüche 1 bis 13, **dadurch gekennzeichnet, daß** die Strahlpumpe (40), die die Hilfspumpeinrichtung bildet, mit dem Kraftstoff versorgt, wird, der von einem Motorrücklauf oder einem Regler (80), der am Ausgang der Hauptpumpeinrichtung (30) angeordnet ist, oder auch von einer Ausgangsstufe der Hauptpumpeinrichtung (30) kommt.

15. Vorrichtung nach einem der Ansprüche 1 bis 14, **dadurch gekennzeichnet, daß** ein äußerer ringförmiger Hohlraum (62) des Ablenkteils (60) an seinem Umfang mit einer Schürze (64) versehen ist, die es erlaubt, den übertragenen Fluß zum Inneren einer sekundäre Reserve umzulenken.

16. Vorrichtung nach einem der Ansprüche 1 bis 15 in Kombination mit Anspruch 2, **dadurch gekennzeichnet, daß** die Leitung (52) mit einem Vorfilter versehen ist.

17. Tank mit einer Fördervorrichtung nach einem der Ansprüche 1 bis 16.

## Claims

1. A fuel-drawing device for a motor vehicle tank, the device being of the type comprising:
· a secondary reserve (20) adapted to be placed in a main tank (10);
· main pump means (30) adapted to draw fuel from the reserve (20);
· auxiliary pump means (40) of the jet pump type adapted to draw fuel from the main tank and transfer it into the secondary reserve (20), the body (41) of the jet pump (40) being vertically oriented with its outlet at the top, the device being **characterized by** the fact that it further comprises a deflector (60) placed facing the outlet (47) of the jet pump (40) to return the fuel coming from the nozzle of the jet pump (40) towards the inside of its Venturi so as to facilitate priming thereof whenever the flow rate injected into the jet pump (40) is below a threshold, the deflector (60) including a generally hemispherical cavity (61) that is coaxial with the outlet (47) of the jet pump and that is concave facing it.

2. A device according to claim 1, **characterized by** the fact that the suction inlet (50) of the jet pump (40) is connected to a duct (52) which opens out close to the bottom of the main tank (10).

3. A device according to claim 2, **characterized by** the fact that the duct is angled (52), comprising a first segment (53) adjacent to the body (41) of the jet pump sloping downwards away from the suction opening formed in the body (41) of the jet pump, and extended by a second segment (54) that is generally vertical and that opens out close to the bottom of the tank (10).

4. A device according to any one of claims 1 to 3, **characterized by** the fact that said cavity (61) of the deflector (60) possesses a mean radius that is smaller than the radius of the outlet (47) of the jet pump.

5. A device according to any one of claims 1 to 4, **characterized by** the fact that the mean radius of the cavity (61) of the deflector (60) is about half the radius of the outlet (47).

6. A device according to any one of claims 1 to 5, **characterized by** the fact that the deflector (60) comprises firstly a first cavity (61) that is central, that lies on the axis of the outlet (47) of the jet pump, and that is concave towards it, and a second cavity that is annular, also lying on the axis of the outlet (47) of the jet pump (40) and placed outside the first cavity (61).

7. A device according to claim 6, **characterized by** the fact that the annular second cavity (62) is generally in the form of half a torus.

8. A device according to claim 6 or claim 7, **characterized by** the fact that the annular second cavity (62) possesses a radially inner edge radius that is less than the radius of the outlet (47) of the jet pump and a radially outer edge radius that is greater than the radius of said outlet (47).

9. A device according to any one of claims 1 to 8, **characterized by** the fact that the deflector (60) is carried by a wall (22) fixed to the top end of the secondary reserve (20).

10. A device according to any one of claims 1 to 9 taken in combination with claim 6, **characterized by** the fact that both cavities (61, 62) of the deflector (60) has end walls that are substantially coplanar.

11. A device according to any one of claims 1 to 10, **characterized by** the fact that the section of the annular gap defined between the outlet (47) of the jet pump and the deflector (60) is substantially equal to or greater than the section of the outlet (47) of the jet pump.

12. A device according to any one of claims 1 to 11, **characterized by** the fact that the jet pump (40) possesses a nozzle (43) whose outlet diameter is about 2 millimeters (mm), and by the fact that the deflector (60) possesses a central cavity (61) that is concave towards the outlet (47) of the jet pump and that lies on the axis of said outlet, possessing a diameter of about 5 mm, the distance between the free edge of the outlet (47) of the jet pump ancd the facing end of the deflector (60) being about 3 mm.

13. A device according to any one of claims 1 to 12, **characterized by** the fact that secondary reserve (20) possesses a valve (70) designed to prevent fuel from flowing from the secondary reserve (20) towards the main tank (10) while allowing fuel to flow freely from the main tank (10) to the secondary reserve (20).

14. A device according to any one of claims 1 to 13, **characterized by** the fact that the jet pump (40) forming the auxiliary pump means is fed with fuel coming from a return from the engine, or from a regulator (80) placed on the outlet of the main pump means (30), or indeed from an outlet stage of said main pump means (30).

15. A device according to any one of claims 1 to 14, **characterized by** the fact that an outer annular cavity (62) of the deflector (60) is provided at its periphery with a skirt (64) serving to deflect the transferred flow towards the inside of a secondary reserve.

16. A device according to any one of claims 1 to 15 taken in combination with claim 2, **characterized by** the fact that the duct (52) is provided with a prefilter.

17. A tank fitted with a fuel-drawing device according to any one of claims 1 to 16.
